# EUROPEAN PATENT SPECIFICATION

(11) **EP 0 708 259 B1**
(45) Date of publication and mention of the grant of the patent: **09.02.2000**
(21) Application number: 95307512.4
(22) Date of filing: 23.10.1995
(51) Int. Cl.: F16B 31/04

(54) **Method of and device for elongating and relaxing a stud or the like**
Verfahren und Vorrichtung zum Verlängern und zum Entspannen eines Zapfens oder dergleichen
Méthode et dispositif pour allonger et relâcher un goujon ou similaire

(30) Priority: 21.10.1994 US 327429; 15.02.1995 US 388746; 13.06.1995 US 489961; 18.10.1995 US 533583
(43) Date of publication of application: 24.04.1996
(73) Proprietor: Junkers, John K., Saddle River New Jersey 07540 (US)
(72) Inventor: Junkers, John K., Saddle River New Jersey 07540 (US)
(74) Representative: Newby, Martin John

(56) References cited:
- WO-A-92/03666
- US-A- 5 341 560

## Description

This invention relates to a method of, and a device for, elongating and relaxing a stud arranged in an object, such as, for example, a flange or the like.

Methods of the above mentioned general type are known in the art. For example, in order to elongate or relax a stud, it is known to use a mechanical nut having two elements which are moved relative to one another in opposite axial directions to elongate the stud or to relax it. There are however many applications where no gaskets are used to seal the two flange portions or where the stud is oversized relative to the required clamping force. Therefore, with a steel-to-steel flange connection there is no compression feasible, and with an oversized stud there is no stud elongation feasible, and thus axial movement of one of the parts becomes possible.

In US-A-5341560 there is disclosed a method of elongating and relaxing a stud in accordance with which a first part engages the stud, a friction element is connected with the first part, a second part is connected with the first part, and a holding force is applied to the first part while an opposite active force is applied to the second part via corresponding first and second engaging means so that the second part turns while the first part moves in the axial direction and elongates (relaxes) the stud. This method eliminates the disadvantages of the prior art. In some instances, however, the first part can be inaccessible, or it might be undesirable to apply the holding force to the first part. In any event, the mechanical tensioner described in US-A-5341560 can cooperate only with such a tool which has a central structure designed to apply a holding force to the first part, and an offset or surrounding structure designed to apply a turning force to the second part. Such tools are special tools, since in conventional tools the situation is just the opposite. In the centre of the tool there is always a drive part, while the housing, which can be used to apply a holding force or to carry a holding element, is offset relative to the central drive part or surrounds the drive part. It is believed to be clear that in many cases it is not desirable to provide a special tool for such a mechanical tensioner.

Accordingly, it is an object of the present invention to provide a method of, and a device for, elongating and relaxing a stud, which is a further improvement of the prior art methods and which eliminates the disadvantages of the prior art methods.

In keeping with these objects and with others which will become apparent hereinafter, one aspect of the present invention resides in elongating and relaxing a stud according to the method claimed in the ensuing claim 1.

In accordance with another feature of the present invention, there is provided a device for elongating and relaxing a stud, the device being as claimed in the ensuing claim 12.

When the method is performed and the device is designed in accordance with the present invention, a standard power tool can be used for cooperation with the device, which tool has a conventional central drive cooperating with the second part of the device for turning the second part, and a housing which is offset relative to the central drive or surrounds the central drive and can be provided with a holding element which applies a holding force to the friction element. Thus, no special tools are needed to operate a device according to the present invention.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings, in which:
Figure 1 is a view showing a cross-section of one embodiment of a device for elongating and relaxing a stud in accordance with the present invention;
Figures 2A and 2B are views showing a further embodiment of a device for elongating and relaxing a stud in accordance with the present invention;
Figure 3 is a view showing still a further embodiment of a device for elongating and relaxing a stud in accordance with the present invention; and
Figure 4 is a view showing an additional embodiment of a device for elongating and relaxing a stud in accordance with the present invention.

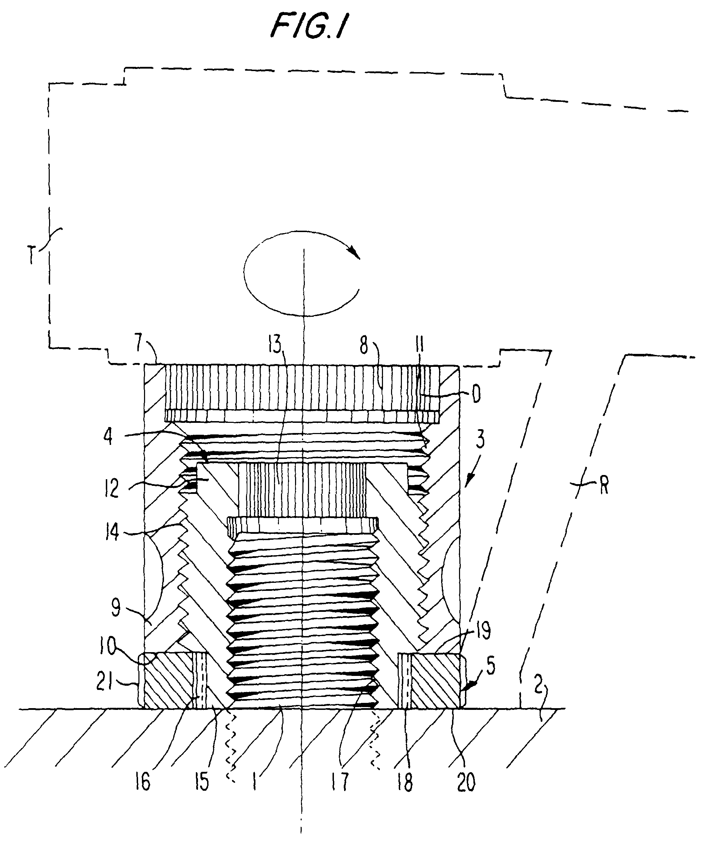

Figure 1 shows a device according to the invention for elongating and relaxing a stud 1 which is arranged in an outside object such as a flange 2 or the like. In accordance with the invention, the stud 1 is engaged by an first or inner part 4 and is movable only axially to pull the stud in the axial direction so as to elongate it and thereby to tension it in the object, or to relax the stud as will be explained hereinbelow. The inner part 4 is moved only axially by means of a turnable second or outer part 3 which is connected with the inner part 4. A friction element 5 cooperates with at least one of the parts 3 and 4 so as to change friction between the parts 3 and 4 as will be explained hereinbelow.

The outer part 3 has an end portion 7 remote from the flange 2 and provided with engaging formations, for example splines 8, to be engaged by a tool. The outer part 3 also has a portion 9 which faces toward the flange 2 and includes a surface 10 arranged to abut against the friction element 5. Finally, the outer part 3 has an inner thread 11. The outer part 3 can be formed as a tubular member provided with the above specified formations.

The inner part 4 is a tubular member having an end portion 12 remote from the flange 2 which is provided with a plurality of engaging formations, for example splines 13, to be engaged by a tool. The inner part 4 has an outer surface provided with an outer thread 14 which engages with the inner thread 11 of the outer part 3. The inner part 4 further has an end portion 15 having an outer surface provided with engaging formations, for example axially extending splines 16. Finally, the inner part 4 has an inner surface provided with engaging formations, formed, for example, as an inner thread 17, for engaging the stud 1.

The friction element 5 is disc-shaped and is located on the one hand between the end portion 9 of the outer part 3 and the flange 2 and, on the other hand, so as to surround the portion 15 of the inner part 4. The friction element 5 has an inner surface provided with a plurality of engaging formations, for example axially extending splines 18, which engage with the axially extending splines 16 of the end portion 15. The friction element 5 has an end surface 19 against which the surface 10 of the outer part 3 abuts and an opposite end surface 20 which abuts against the outer surface of the flange 2. Finally, the friction element 5 has an outer circumferential surface provided with a plurality of engaging formations, for example splines 21.

The inner thread 11 and the outer thread 14 have one direction, while the inner thread 17 has another direction (although this is not shown in the schematic illustration of Figure 1). For example, the inner thread 17 can be a right-hand thread, while the threads 11 and 14 can be left-hand threads.

As described above the connecting means connecting the inner part 4 with the outer part 3 comprise threads 11 and 14, while the engaging means connecting the inner part 4 with the friction elements 15 conveniently comprise the splines 16 and 18. The threads 11 and 14 are axially spaced from the interengaging splines 16 and 18.

It can be seen that the inner part 4 has four surfaces cooperating with other parts and subjectable to friction. These surfaces are the surface of the inner thread 17, the surface of the outer thread 14, the end surface abutting against the friction element 5, and the end surface abutting against the flange 2. In contrast, the outer part 3 has only two surfaces which are subjectable to friction, namely the surface of the inner thread 11, and the end surface 19 abutting against the friction element 5.

In order to elongate or relax the stud in accordance with the inventive method, a standard tool T (shown schematically in dashed lines in Figure 1) is employed. The tool is applied so that its drive part D around the central axis engages the splines 8 of the outer part 3 to turn the latter while a reaction part R of the tool which can be connected, for example, to the immovable housing of the tool, which surrounds the drive part D, engages the splines 21 of the friction element 5 so as to at least hold the friction element in order to prevent its rotation. When the outer part 3 is turned about an axis of the tensioner and the stud, its surface 10 abuts against the end surface 19 of the friction element 5 and therefore the outer part 3 cannot move axially downwards (in Figure 1) further onto the friction element 5. Under the action of turning of the outer part 3, and due to the cooperation between the threads 11, 14, the inner part 4 is displaced axially upwards (in Figure 1) along the cooperating axially extending splines 16, 18, but does not turn around the axis. During these movements the friction element 5 is displaced neither rotationally about the axis nor in the axial direction, i.e. it is immovable relative to the flange 2. The axial upward displacement of the inner part 4 without turning around the axis causes pulling of the stud 1 upwardly so that it is elongated.

Thus due to inventive cooperation of the parts 3 and 4 and the friction element 5, which imparts a higher friction to the inner part 4 than the outer part 3 when a turning force is applied to the parts 3, 4 (by applying a force to one part, by holding one part and turning another part, by applying a turning force to both parts in opposite directions with equal forces), after elimination of the gaps in the assembly, the outer part 3 rotates while the inner part 4 moves only axially upwardly to pull the stud 1 axially upwardly.

It is to be understood that in order to relax the stud 1 the outer part 3 must be turned around the axis in an opposite direction, so that the inner part 4 is displaced axially downwardly and the stud is therefore relaxed.

As can be seen in Figure 1 and described hereinabove, the inner part 4 is provided with splines 13. Therefore, instead of applying the holding force to the friction element by using a tool which engages the engaging means 21 of the friction element 20, the tool can engage the splines 13 of the inner part 4 and hold it in addition to the holding of the friction element 5.

As mentioned hereinabove, at least a holding force is applied to the friction element 5. However, it is possible to apply the friction element 5 an active force which acts in a direction opposite to the direction of action of the active force applied to the outer part 3. In other words, when one active force, for example the force applied to the outer part 3, acts in a clockwise direction, the force applied to the friction element 5 acts in counterclockwise direction.

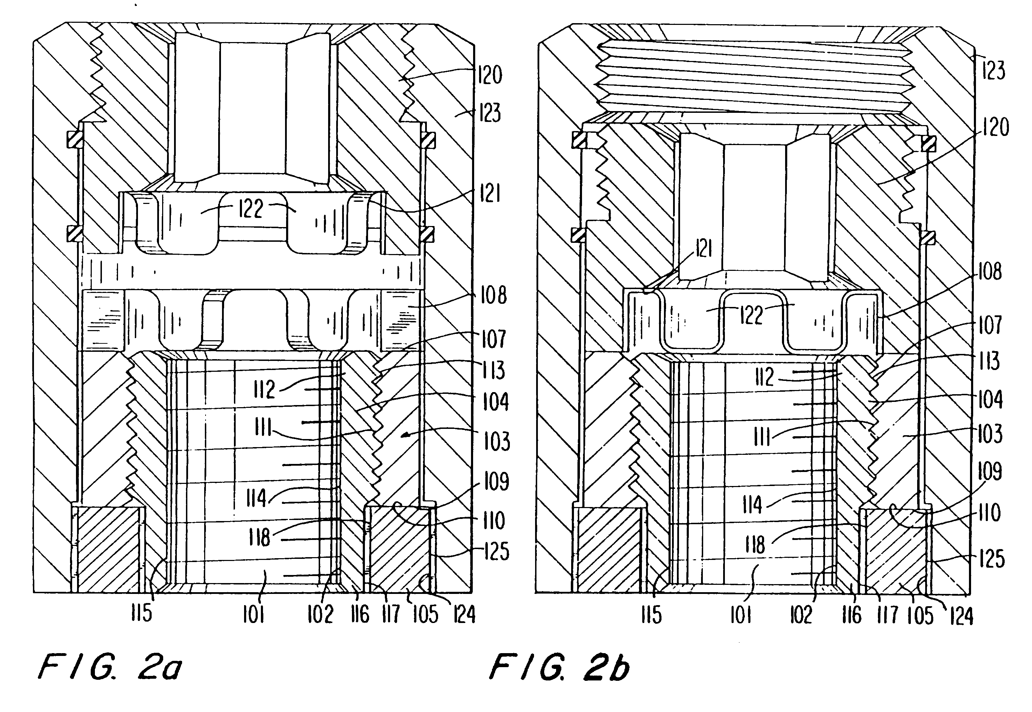

A device in accordance with another embodiment of the present invention and shown in Figures 2A and 2B is used for elongating and relaxing a stud 101 which is arranged in an outside object such as a flange 102 or the like. The device has an inner or first part 104, an outer or second part 103, and a friction element 105 located between the inner and outer parts 104 and 103.

The outer part 103 has an end portion 107 provided with teeth 108 which can be engaged by a tool. The outer part 103 also has a surface 109 which faces toward the flange 102 and is arranged to abut against a facing surface 110 of the friction element 105. Finally, the outer part 103 has an inner thread 111.

The inner part 104 has a cylindrical first portion 112 which is distant from the flange 102 and has an outer surface provided with an outer thread 113 engageable with an inner thread 111 of the outer part 103. The inner part 104 also has an inner thread 114 engageable with an outer thread 115 of the stud 101. Finally, the inner part 104 has an axial second portion 116 which is polygonal and is provided with outer splines 117.

The friction element 105 is ring-shaped and on the one hand is located between the end portion 109 of the outer part 103 and the flange 102 and on the other hand surrounds the portion 114 of the inner part 104. The friction element 105 has an inner surface provided with a plurality of axially extending splines 118 engageable with the splines 117 of the portion 116 of the inner part 104.

An inner socket 120 has an end portion 121 provided with a plurality of teeth 122 engageable with the teeth 108 of the outer part 103. An outer socket 123 is turnable relative to the inner socket 120 and has a lower portion with an inner peripheral surface provided with inner splines 124 engageable with splines 125 provided on an outer peripheral surface of the friction element 105.

The inner socket 120 is connectable with a rotatable and axially displaceable part of a power tool (not shown), while the outer socket 123 can be connectable with a part of a power tool.

During operation the outer non-rotatable socket 123 holds on the friction element 105 non-rotatably by interengagement of the splines 124, 125 so as to apply at least a holding force to the friction element 105. The inner socket 120 is lowered so that its teeth 122 interengage with the teeth 108 of the second part 103, and an active rotary force is applied to the socket 120 and thereby to the outer part 103. The outer part 103 is rotated relative to the inner part 104 causing the inner part 104 to move axially upwardly (due to the cooperation of the threads 111 and 113). The inner part 104 pulls the stud 101 upwardly due to the cooperation of the threads 114, 115 without turning the stud relative to its axis, so that the stud 101 is elongated. Turning of the socket 120 in an opposite direction results in turning of the outer part 103 in the opposite direction and thereby moving the stud in an opposite axial direction so as to relax the stud.

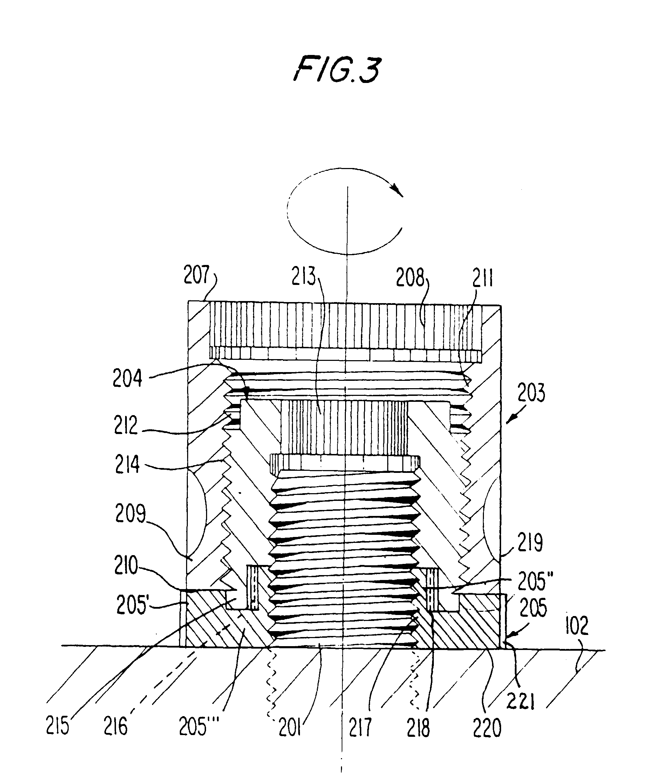

A device in accordance with a further embodiment of the present invention and shown in Figure 3 is used for elongating and relaxing a stud 201 which is arranged in an outside object such as a flange 202 or the like. In accordance with the invention, the stud 201 is engaged by a first or inner part 204 and is movable only axially to pull the stud in the axial direction so as to elongate it and thereby to tension it in the object, or to relax the stud as will be explained hereinbelow. The inner part 204 is moved only axially by means of a turnable second or outer part 203 which is connected with the inner part 204. A friction element 205 cooperates with at least one of the parts 203 and 204 so as to change friction between the parts 203 and 204 as will be explained hereinbelow.

The outer part 203 has an end portion 207 remote from the flange 202 and provided with splines 208 to be engaged by a tool. The outer part 203 also has a portion 209 which faces toward the flange 202 and has a surface 210 arranged to abut against the friction elements 205. Finally, the outer part 203 has an inner thread 211. The outer part 203 can be formed as a tubular member provided with the above specified formations.

The inner part 204 is a tubular member and has an end portion 212 remote from the flange 202 provided with a plurality of axially extending splines 213 to be engaged by a tool. The inner part also has an outer surface provided with an outer thread 214 which engages with the inner thread 211. The inner part 204 further has an end portion 215 which has an inner surface provided with axially extending splines 216. Finally, the inner part 2C4 has an inner surface provided with an inner thread 217 for engaging with the stud 201.

The friction element 205 is disc-shaped, in particular being stepped and including an outer annular portion 205', an inner annular portion 205" and a connecting portion 205"' extending between the outer and inner annular portions. The friction element on the one hand is located between the end portion 209 of the outer part 203 and the flange 202 and, on the other hand, surrounds the portion 215 of the inner part 204. The outer surface of the inner annular portion 205" has an outer surface provided with a plurality of axially extending splines 213, which engage with the axially extending splines 216 of the end portion 215. Thus, the spline engagement between the inner part 204 and the friction element 205 is obtained inside the inner part 204. The friction element 205 has an end surface 219 against which the surface 210 of the outer part 203 abuts and also an opposite end surface 220 which abuts against the outer surface of the flange 202. Finally, the friction element 205 has an outer circumferential surface provided with a plurality of axially extending splines 221.

In order to elongate or relax the stud, a standard tool (not shown) is applied so that its drive part around the central axis engages the splines 208 of the outer part 203 to turn the latter while a reaction part of the tool connected to the housing of the tool surrounding the drive part, engages the splines 221 of the friction element 205 so as to at least hold the housing and so as to prevent the rotation of the friction element along with the outer part 203. When the outer part 203 is turned in one direction about this axis, the inner part 204 is displaced axially upwards (in Figure 3) with sliding along the axially extending splines 216, 218 of the portions 215 and 205". The axial upward displacement of the inner part 204 without turning about the axis, causes pulling of the stud 201 upwardly so that it elongates.

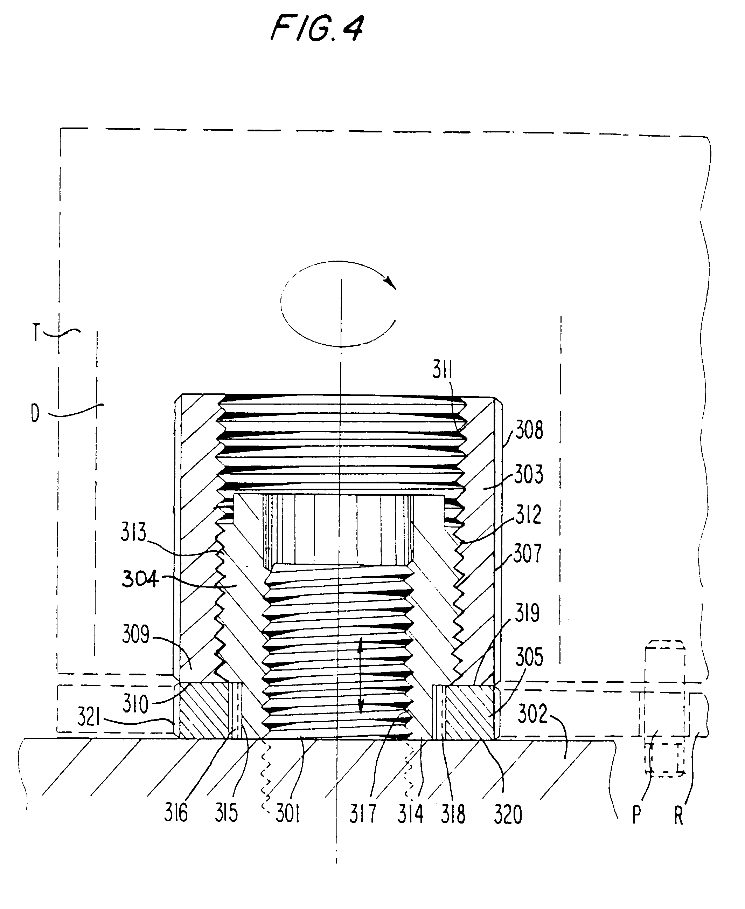

Finally, a device in accordance with another embodiment is shown in Figure 4 and is used for elongating and relaxing a stud 301 which is arranged in an outside object such as a flange 302 or the like. The stud 301 is engaged by a first or inner part 304 and is movable only axially either to pull the stud in the axial direction so as to elongate it and thereby to tension it in the object or to relax the stud as will be explained hereinbelow. The inner part 304 is moved only axially by means of a turnable second or outer part 303 which is connected with the inner part 304. A friction element 305 cooperates with at least one of the parts 303 and 304 so as to change friction between the parts 303 and 304 as will be explained hereinbelow.

The outer part 303 has a cylindrical peripheral surface 307 provided with axially extending splines 308 to be engaged by a tool. The outer part 303 also has an end portion 309 facing toward the flange 302 and having an end surface 310 arranged to abut against the friction element 305. Finally, the outer part 303 has an inner thread 311. The inner part 304 has an outer surface 312 provided with an outer thread 313 which engages with the inner thread 311.

The inner part 304 further has a portion 314 which has an outer surface 315 provided with axially extending splines 316. Finally, the inner part 304 has an inner surface provided with an inner thread 317 for engaging with the stud 301.

The friction element 305 is disc-shaped and on the one hand is located between the end portion 309 of the outer part 303 and the flange 302 and, on the other hand, surrounds the portion 314. The friction element 305 has an inner surface provided with a plurality of axially extending splines 318 which engage with the axially extending splines 316 of the portion 314. The friction element 305 has an end surface 319 against which the end surface 310 of the outer part 303 abuts, and also an opposite end surface 320 which abuts against the outer surface of the flange 302. Finally, the friction element 305 has an outer circumferential surface provided with a plurality of axially extending splines 321.

In order to elongate or relax the stud a standard tool T (shown in dashed lines in Figure 4) is applied so that its drive part D around the central axis engages the outer splines 308 of the outer part 303 to turn the latter while a reaction part R of the tool, which can be connected, for example, to the housing of the tool which surrounds the drive part D, engages the outer splines 321 of the friction element 305 so as to at least hold the friction element in order to prevent its rotation. When the outer part 303 is turned in a given direction about its axis, the inner part 304 is displaced axially upwards (in Figure 4) along the cooperating axial splines 315, 318, but does not turn around the axis. The axial upward displacement of the inner part 304 without turning causes pulling of the stud 301 upwardly and therefore it is subjected to an elongating force.

As mentioned hereinabove, at least a holding force is applied to the friction element 305. However, it is possible to apply to the friction element 305 an active force which acts in a direction opposite to the direction of action of the active force applied to the outer part 303. In other words when one active force, for example the force applied to the outer part 303, acts in a clockwise direction, the force applied to the friction element 305 acts in the counterclockwise direction.

It will be understood that each of the elements described above, or two or more together, may also find a useful application in other types of methods and constructions differing from the types described above.

While the invention has been illustrated and described as embodied in a method of and a device for elongating and relaxing a stud, it is not intended to be limited to the details shown, since various modifications and structural changes may be made without departing in any way from the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

## Claims

1. A method of elongating and relaxing a stud (1) having an axis and arranged in an object (2), comprising the steps of connecting the stud with a first part (4) which is movable only axially so as either to pull the stud in an axial direction to elongate the stud and thereby to tension it in the object (2) or to relax the stud (1); moving the first part (4) only axially by connecting the first part with a turnable second part (3); and connecting a friction element (5) with the first part (4) so that the first part (4) has more surfaces cooperating with other elements and subjectable to friction during movement than the second part (3) and so that the second part (3) is not connected with the friction element (5) but instead is freely turnable relative to the friction element (5) while freely abutting against the friction element (5); characterised in that the method further comprises applying at least a holding force directly and optionally indirectly to the friction element via first engaging means and simultaneously applying an opposite active force to the second part (3) via second engaging means (8) whereby the second part (3) is turned, the friction element (5) does not move, and the first part (4) is moved axially to move the stud (1) axially without turning to elongate or relax the stud (1).

2. A method according to claim 1, characterised in that the step of connecting the first part (4) with the stud (1) is performed by first thread means (17) and the step of connecting the first part (4) with the second part (3) is performed by second thread means (11,14).

3. A method according to claim 1 or 2, characterised in that it further comprises the step of arranging the friction element (5) between the object (2) and an end portion (9) of the second part (3) which faces the object (2) so that the friction element (5) surrounds an end portion (15) of the first part (4) which faces the object (2).

4. A method according to any of the preceding claims, characterised in that said step of applying said opposite active force includes engaging the second part (3) with a tool (T) and turning the second part (3) with the tool.

5. A method according to any of claims 1 to 3, characterised in that said applying the holding force includes engaging the first engaging means (21) of the friction element (5) by a tool and holding the friction element (5) immovably against turning.

6. A method according to any of claims 1 to 3, characterised in that said applying the holding force includes engaging the first engaging means (21) of the friction element (5) and also engaging the first engaging means (13) of the first part (4) and indirectly applying the holding force to the friction élément (5) for holding the friction element (5) immovably against turning.

7. A method according to claim 1, characterised in that it further comprises the step of providing first connecting means (111,113) for connecting the first part (104) with the second part (103) so that the second part (103) turns, and second connecting means (117,118) axially spaced from the first connecting means (111,113) and connecting the first part (104) with the friction element (105) so that the first part (104) moves only axially.

8. A method according to claim 7, characterised in that said applying said opposite active force includes engaging the second part (103) with an inner socket (120) of a tool and engaging the friction element (105) with an outer socket (123) of the tool which is rotatable relative to the inner socket (120).

9. A method according to claim 8, characterised in that said engaging the second part (103) with the inner socket (120) includes providing further engaging means (108) on an axial end portion (107) of the second part (103), providing on an opposite axial end portion (121) of the inner socket (120) further engaging formations (122), and engaging the further engaging means (108) of the second part (103) with the further engaging formations (122) of the inner socket (120), and in that said engaging the friction element (105) with the outer socket (123) includes providing on an outer peripheral surface of the friction element (105) additional engaging means (125), providing on an inner peripheral surface of the outer socket (123) additional engaging formations (124), and engaging said additional engaging means (125) with said additional engaging formations (124).

10. A method according to claim 1, characterised in that said connecting of the friction element (205) with the first part (204) includes connecting the friction element (205) with the first part (204) radially inside the first part.

11. A method according to claim 1, characterised in that said applying the opposite active force to the second part (303) includes applying the opposite active force to an outer peripheral portion of the second part (303) provided with the second engaging means (308).

12. A device for elongating and relaxing a stud (1) having an axis and arranged in an object (2), comprising a first part (4) connectable with the stud (1) and movable only axially so as to pull the stud (1) in an axial direction to elongate the stud and thereby to tension it in the object or to relax the stud; a turnable second part (3) provided for moving said first part (4) axially and, for this purpose, connected with said first part (4), the second part having first engaging means (8) to enable a turning force to be applied thereto; and a friction element (5) connected with said first part (4) so that said first part (4) has more surfaces cooperating with ether elements and subjectable to friction during movement than said second part (3) and so that said second part (3) is not connected with said friction element (5) but instead is freely turnable relative to said friction element (5) while freely abutting against the friction element (5); characterised in that said friction element (5) and optionally said first part (4) has second engaging means (21) formed so that at least a holding force is applicable directly through said second engaging means (21), and optionally indirectly through said first part (4), to said friction element (5), while the said turning force is applied to the first engaging means simultaneously and in an opposite directions so that when said second part (3) is turned and said friction element (5) is held immovably, said first part (4) is moved axially to move the stud (1) axially without turning so as to elongate or relax the stud.

13. A device according to claim 12, characterised in that it further comprises first thread means (17) connecting said first part (4) with the stud (1), and second thread means (12,14) connecting said first part (4) with said second part (3).

14. A device according to claim 12 or 13, characterised in that said friction element (5) is arranged between the object (2) and an end portion (9) of said second part (3) which faces the object so that said friction element (5) surrounds an end portion (15) of said first part (4) which faces the object (2).

15. A device according to any of claims 12 to 14, characterised in that said first engaging means (8) of said second part (3) is formed so that said opposite active force is applicable to said second part (3) by engaging said first engaging means of said second part by a tool (T) so as to turn said second part (3) by the tool.

16. A device according to claim 12, characterised in that said second engaging means (21) is formed so that said first holding force is applicable to said friction element (5) by engaging said second engaging means (21) with a tool so as to hold said friction element (5) during turning of said second part (3).

17. A device according to claim 12, characterised in that it further comprises an inner socket (120) provided with further engaging formations (122) engageable with said first engaging means (108), and an outer socket (123) rotatable relative to said first socket (120) and provided with additional engaging formations (124) engageable with said second engaging means (125) of said friction element (105).

18. A device according to claim 17, characterised in that said first engaging means (122) of said second part (103) are provided on an end portion (108) of said second part (103), in that said further engaging formations (122) of said first socket (120) are provided on an opposites end portion (121) of said first socket (120), in that said second engaging means (125) of said friction element (105) are provided on an outer peripheral surface of said friction element, and in that said additional engaging formations (124) of said second socket (123) are provided on an inner peripheral surface of said second socket.

19. A device according to claim 12, characterised in that said friction element (205) is connected with said first part (204) radially inside said first part.

20. A device according to claim 12, characterised in that said second part (303) has an outer peripheral surface (307) provided with first engaging means (308) to which the opposite active force is applied.

21. A device according to claim 12, characterised in that said first engaging means (21, 13) is formed on said friction element (5) and on said first part (4), so that the holding force is applied to said first part (4) through said first engaging means (13) and thereby indirectly to the friction element (5) and also the holding force is applied directly to the friction element (5) through said first engaging means (21).

## Patentansprüche

1. Verfahren zum Verlängern und Entspannen eines in einem Objekt (2) angeordneten Zapfens (1) mit einer Achse, das die folgenden Schritte umfaßt: Verbinden des Zapfens mit einem ersten Teil (4), das nur axial beweglich ist, um den Zapfen entweder in einer Axialrichtung zu ziehen, um den Zapfen zu verlängern und ihn dadurch in dem Objekt (2) zu spannen oder um den Zapfen (1) zu entspannen; Bewegen des ersten Teils (4) nur in Axialrichtung durch Verbinden des ersten Teils mit einem drehbaren zweiten Teil (3); und Verbinden eines Reibungselements (5) mit dem ersten Teil (4), so daß bei Bewegung mehr Flächen des ersten Teils (4) mit anderen Elementen zusammenwirken und Reibung ausgesetzt sein können als beim zweiten Teil (3) und so daß das zweite Teil (3) nicht mit dem Reibungselement (5) verbunden ist, sondern stattdessen bezüglich des Reibungselements (5) frei drehbar ist, während es frei an dem Reibungselement (5) anliegt; dadurch gekennzeichnet, daß das Verfahren weiterhin zumindest das direkte und wahlweise indirekte Anlegen einer Haltekraft an das Reibungselement über ein erstes Eingriffsmittel und das gleichzeitige Anlegen einer entgegengesetzten aktiven Kraft an das zweite Teil (3) über ein zweites Eingriffsmittel (8) umfaßt, wodurch das zweite Teil (3) gedreht wird, das Reibungselement (5) sich nicht bewegt und das erste Teil (4) axial bewegt wird, um den Zapfen (1) axial ohne Drehen zu bewegen, um den Zapfen (1) zu verlängern oder zu entspannen.

2. Verfahren nach Anspruch 1, dadurch gekennzeichnet, daß der Schritt des Verbindens des ersten Teils (4) mit dem Zapfen (1) durch ein erstes Gewindemittel (17) ausgeführt wird und der Schritt des Verbindens des ersten Teils (4) mit dem zweiten Teil (3) durch zweite Gewindemittel (11, 14) ausgeführt wird.

3. Verfahren nach Anspruch 1 oder 2, dadurch gekennzeichnet, daß es weiterhin den Schritt des derartigen Anordnens des Reibungselements (5) zwischen dem Objekt (2) und einem zu dem Objekt (2) weisenden Endteil (9) des zweiten Teils (3), daß das Reibungselement (5) einen zu dem Objekt (2) weisenden Endteil (15) des ersten Teils (4) umgibt, umfaßt.

4. Verfahren nach einem der vorhergehenden Ansprüche, dadurch gekennzeichnet, daß der Schritt des Anlegens der entgegengesetzten aktiven Kraft das Ineingriffnehmen des zweiten Teils (3) mit einem Werkzeug (T) und Drehen des zweiten Teils (3) mit dem Werkzeug umfaßt.

5. Verfahren nach einem der Ansprüche 1 bis 3, dadurch gekennzeichnet, daß das Anlegen der Haltekraft das Ineingriffnehmen des ersten Eingriffsmittels (2) des Reibungselements (5) durch ein Werkzeug und das Unbeweglichhalten des Reibungselements (5) gegen Drehung umfaßt.

6. Verfahren nach einem der Ansprüche 1 bis 3, dadurch gekennzeichnet, daß das Anlegen der Haltekraft das Ineingriffnehmen des ersten Eingriffsmittels (21) des Reibungselements (5) und auch das Ineingriffnehmen des ersten Eingriffsmittels (13) des ersten Teils (4) und indirektes Anlegen der Haltekraft an das Reibungselement (5) zum Unbeweglichhalten des Reibungselements (5) gegen Drehung umfaßt.

7. Verfahren nach Anspruch 1, dadurch gekennzeichnet, daß es weiterhin den Schritt des Bereitstellens erster Verbindungsmittel (111, 113) zur Verbindung des ersten Teils (104) mit dem zweiten Teil (103), so daß sich das zweite Teil (103) dreht, und zweite Verbindungsmittel (117, 118) axial beabstandet von den ersten Verbindungsmitteln (111, 113) und derartiges Verbinden des ersten Teils (104) mit dem Reibungselement (105), daß sich das erste Teil (104) nur axial bewegt, umfaßt.

8. Verfahren nach Anspruch 7, dadurch gekennzeichnet, daß das Anlegen der entgegengesetzten aktiven Kraft das Ineingriffnehmen des zweiten Teils (103) mit einer Innenbuchse (120) eines Werkzeugs und Ineingriffnehmen des Reibungselements (105) mit einer Außenbuchse (123) des Werkzeugs, die bezüglich der Innenbuchse (120) drehbar ist, umfaßt.

9. Verfahren nach Anspruch 8, dadurch gekennzeichnet, daß das Ineingriffnehmen des zweiten Teils (103) mit der Innenbuchse (120) das Bereitstellen weiterer Eingriffsmittel (108) an einem axialen Endteil (107) des zweiten Teils (103), das Bereitstellen weiterer Eingriffsausbildungen (122) an einem gegenüberliegenden axialen Endteil (121) der Innenbuchse (120) und das Ineingriffnehmen der weiteren Eingriffsmittel (108) des zweiten Teils (103) mit den weiteren Eingriffsausbildungen (122) der Innenbuchse (120) umfaßt und daß das Ineingriffnehmen des Reibungselements (105) mit der Außenbuchse (123) das Bereitstellen zusätzlicher Eingriffsmittel (125) an einer äußeren Umfangsfläche des Reibungselements (105), das Bereitstellen zusätzlicher Eingriffsausbildungen (124) an einer inneren Umfangsfläche der Außenbuchse (123) und das Ineingriffnehmen der zusätzlichen Eingriffsmittel (125) mit den zusätzlichen Eingriffsausbildungen (124) umfaßt.

10. Verfahren nach Anspruch 1, dadurch gekennzeichnet, daß das Verbinden des Reibungselements (205) mit dem ersten Teil (204) das Verbinden des Reibungselements (205) mit dem ersten Teil (204) radial innerhalb des ersten Teils umfaßt.

11. Verfahren nach Anspruch 1, dadurch gekennzeichnet, daß das Anlegen der entgegengesetzten aktiven Kraft an den zweiten Teil (303) das Anlegen der entgegengesetzten aktiven Kraft an einen äußeren Umfangsteil des zweiten Teils (303), der mit dem zweiten Eingriffsmittel (308) versehen ist, umfaßt.

12. Vorrichtung zum Verlängern und Entspannen eines in einem Objekt (2) angeordneten Zapfens (1) mit einer Achse, die folgendes umfaßt: ein erstes Teil (4), das mit dem Zapfen (1) verbindbar ist und nur axial bewegt werden kann, um den Zapfen (1) in einer Axialrichtung zu ziehen, um den Zapfen zu verlängern und ihn dadurch in dem Objekt zu spannen oder um den Zapfen zu entspannen; ein drehbares zweites Teil (3), das zum Bewegen des ersten Teils (4) in Axialrichtung vorgesehen ist und dazu mit dem ersten Teil (4) verbunden ist, wobei das zweite Teil ein erstes Eingriffsmittel (8) aufweist, um das Anlegen einer Drehkraft daran zu ermöglichen; und ein Reibungselement (5) , das mit dem ersten Teil (4) verbunden ist, so daß bei Bewegung mehr Flächen des ersten Teils (4) mit anderen Elementen zusammenwirken und Reibung ausgesetzt sein können als beim zweiten Teil (3) und so daß das zweite Teil (3) nicht mit dem Reibungselement (5) verbunden ist, sondern stattdessen bezüglich des Reibungselements (5) frei drehbar ist, während es frei an dem Reibungselement (5) anliegt; dadurch gekennzeichnet, daß das Reibungselement (5) und wahlweise das erste Teil (4) ein zweites Eingriffsmittel (21) aufweisen, das so ausgebildet ist, daß mindestens eine Haltekraft direkt durch das zweite Eingriffsmittel (21) und wahlweise indirekt durch das erste Teil (4) an das Reibungselement (5) angelegt werden kann, während die Drehkraft gleichzeitig an das erste Eingriffsmittel und in entgegengesetzter Richtung angelegt wird, so daß bei Drehen des zweiten Teils (3) und Unbeweglichhalten des Reibungselements (5) das erste Teil (4) axial bewegt wird, um den Zapfen (1) ohne Drehen axial zu bewegen, um den Zapfen zu verlängern oder zu entspannen.

13. Vorrichtung nach Anspruch 12, dadurch gekennzeichnet, daß sie weiterhin ein erstes Gewindemittel (17), das das erste Teil (4) mit dem Zapfen (1) verbindet, und zweite Gewindemittel (12, 14), die den ersten Teil (4) mit dem zweiten Teil (3) verbinden, umfaßt.

14. Vorrichtung nach Anspruch 12 oder 13, dadurch gekennzeichnet, daß das Reibungselement (5) zwischen dem Objekt (2) und einem zu dem Objekt (2) weisenden Endteil (9) des zweiten Teils(3) angeordnet ist, so daß das Reibungselement (5) einen zu dem Objekt (2) weisenden Endteil (15) des ersten Teils (4) umgibt.

15. Vorrichtung nach einem der Ansprüche 12 bis 14, dadurch gekennzeichnet, daß das erste Eingriffsmittel (8) des zweiten Teils (3) so ausgebildet ist, daß die entgegengesetzte aktive Kraft an das zweite Teil (3) angelegt werden kann, indem das erste Eingriffsmittel des zweiten Teils durch ein Werkzeug (T) in Eingriff genommen werden kann, um das zweite Teil (3) mit dem Werkzeug zu drehen.

16. Vorrichtung nach Anspruch 12, dadurch gekennzeichnet, daß das zweite Eingriffsmittel (21) so ausgebildet ist, daß die erste Haltekraft an das Reibungselement (5) angelegt werden kann, indem das zweite Eingriffsmittel (21) mit einem Werkzeug in Eingriff genommen wird, um das Reibungselement (5) beim Drehen des zweiten Teils (3) festzuhalten.

17. Vorrichtung nach Anspruch 12, dadurch gekennzeichnet, daß sie weiterhin eine Innenbuchse (120), die mit weiteren Eingriffsausbildungen (122) versehen ist, welche mit den ersten Eingriffsmitteln (108) in Eingriff gebracht werden können, und eine Außenbuchse (123), die bezüglich der Innenbuchse (120) drehbar ist und mit zusätzlichen Eingriffsausbildungen (124) versehen ist, die mit den zweiten Eingriffsmitteln (125) des Reibungselements (105) in Eingriff gebracht werden können, umfaßt.

18. Vorrichtung nach Anspruch 17, dadurch gekennzeichnet, daß die ersten Eingriffsmittel (122) des zweiten Teils (103) an einem Endteil (108) des zweiten Teils (103) vorgesehen sind, daß die weiteren Eingriffsausbildungen (122) der ersten Buchse (120) an einem gegenüberliegenden Endteil (121) der ersten Buchse (120) vorgesehen sind, daß die zweiten Eingriffsmittel (125) des Reibungselements (105) an einer äußeren Umfangsfläche des Reibungselements vorgesehen sind und daß die zusätzlichen Eingriffsausbildungen (124) der zweiten Buchse (123) an einer innere Umfangsfläche der zweiten Buchse vorgesehen sind.

19. Vorrichtung nach Anspruch 12, dadurch gekennzeichnet, daß das Reibungselement (205) mit dem ersten Teil (204) radial innerhalb des ersten Teils verbunden ist.

20. Vorrichtung nach Anspruch 12, dadurch gekennzeichnet, daß das zweite Teil (303) eine äußere Umfangsfläche (307) aufweist, die mit einem ersten Eingriffsmittel (308) versehen ist, an dem die entgegengesetzte aktive Kraft angelegt wird.

21. Vorrichtung nach Anspruch 12, dadurch gekennzeichnet, daß das erste Eingriffsmittel (21, 13) an dem Reibungselement (5) und an dem ersten Teil (4) ausgebildet ist, so daß die Haltekraft durch das erste Eingriffsmittel (13) an das erste Teil (4) und dadurch indirekt an das Reibungselement (5) angelegt wird und des weiteren die Haltekraft durch das erste Eingriffsmittel (21) direkt an das Reibungselement (5) angelegt wird.

## Revendications

1. Procédé pour allonger et relâcher un goujon (1) ayant un axe et disposé dans un objet (2), comprenant les étapes consistant à connecter le goujon à une première partie (4) qui peut seulement se déplacer axialement de manière à soit tirer le goujon dans une direction axiale pour allonger le goujon et donc le tendre dans l'objet (2) soit relâcher le goujon (1); déplacer la première partie (4) seulement axialement en connectant la première partie à une deuxième partie (3) pouvant être tournée; et connecter un élément de frottement (5) à la première partie (4) de sorte que la première partie (4) ait plus de surfaces coopérant avec d'autres éléments et pouvant être soumises à un frottement au cours du déplacement que la deuxième partie (3) et de sorte que la deuxième partie (3) ne soit pas connectée à l'élément de frottement (5) mais puisse au contraire tourner librement par rapport à l'élément de frottement (5) tout en venant buter librement contre l'élément de frottement (5); caractérisé en ce que le procédé comprend en outre l'application d'au moins une force de retenue directement et, en option, indirectement, à l'élément de frottement par l'intermédiaire de premiers moyens d'engagement et l'application simultanée d'une force active opposée à la deuxième partie (3) par l'intermédiaire de deuxièmes moyens d'engagement (8), ce par quoi la deuxième partie (3) est tournée, l'élément de frottement (5) ne bouge pas, et la première partie (4) est déplacée axialement pour déplacer le goujon (1) axialement sans le faire tourner pour allonger ou relâcher le goujon (1).

2. Procédé selon la revendication 1, caractérisé en ce que l'étape consistant à connecter la première partie (4) au goujon (1) est effectuée par un premier moyen de filetage (17) et l'étape consistant à connecter la première partie (4) à la deuxième partie (3) est effectuée par des deuxièmes moyens de filetage (11, 14).

3. Procédé selon la revendication 1 ou 2, caractérisé en ce qu'il comprend en outre l'étape consistant à disposer l'élément de frottement (5) entre l'objet (2) et une portion d'extrémité (9) de la deuxième partie (3) qui fait face à l'objet (2) de sorte que l'élément de frottement (5) entoure une portion d'extrémité (15) de la première partie (4) qui fait face à l'objet (2).

4. Procédé selon l'une quelconque des revendications précédentes, caractérisé en ce que ladite étape d'application de ladite force active opposée inclut l'engagement de la deuxième partie (3) avec un outil (T) et la rotation de la deuxième partie (3) avec l'outil.

5. Procédé selon l'une quelconque des revendications 1 à 3, caractérisé en ce que ladite application de la force de retenue inclut l'engagement du premier moyen d'engagement (21) de l'élément de frottement (5) par un outil et la retenue de l'élément de frottement (5) de manière fixe en rotation.

6. Procédé selon l'une quelconque des revendications 1 à 3, caractérisé en ce que ladite application de la force de retenue inclut l'engagement du premier moyen d'engagement (21) de l'élément de frottement (5) et également l'engagement du premier moyen d'engagement (13) de la première partie (4) et l'application indirecte de la force de retenue à l'élément de frottement (5) pour retenir l'élément de frottement (5) de manière fixe en rotation.

7. Procédé selon la revendication 1, caractérisé en ce qu'il comprend en outre l'étape consistant à fournir des premiers moyens de connexion (111, 113) pour connecter la première partie (104) à la deuxième partie (103) de sorte que la deuxième partie (103) tourne, et des deuxièmes moyens de connexion (117, 118) espacés axialement des premiers moyens de connexion (111, 113) et connectant la première partie (104) à l'élément de frottement (105) de sorte que la première partie (104) se déplace seulement axialement.

8. Procédé selon la revendication 7, caractérisé en ce que ladite application de ladite force active opposée inclut l'engagement de la deuxième partie (103) avec une prise interne (120) d'un outil et l'engagement de l'élément de frottement (105) avec une prise externe (123) de l'outil qui peut tourner par rapport à la prise interne (120).

9. Procédé selon la revendication 8, caractérisé en ce que ledit engagement de la deuxième partie (103) avec la prise interne (120) inclut la fourniture de moyens d'engagement supplémentaires (108) sur une portion d'extrémité axiale (107) de la deuxième partie (103), la fourniture sur une portion d'extrémité axiale opposée (121) de la prise interne (120) de formations d'engagement supplémentaires (122), et l'engagement des moyens d'engagement supplémentaires (108) de la deuxième partie (103) avec les formations d'engagement supplémentaires (122) de la prise interne (120), et en ce que ledit engagement de l'élément de frottement (105) avec la prise externe (123) inclut la fourniture, sur une surface périphérique externe de l'élément de frottement (105) de moyens d'engagement supplémentaires (125), la fourniture sur une surface périphérique interne de la prise externe (123) de formations d'engagement supplémentaires (124), et l'engagement desdits moyens d'engagement supplémentaires (125) avec lesdites formations d'engagement supplémentaires (124).

10. Procédé selon la revendication 1, caractérisé en ce que ladite connexion de l'élément de frottement (205) à la première partie (204) inclut la connexion de l'élément de frottement (205) avec la première partie (204) radialement à l'intérieur de la première partie.

11. Procédé selon la revendication 1, caractérisé en ce que ladite application de la force active opposée à la deuxième partie (303) inclut l'application de la force active opposée à une portion périphérique externe de la deuxième partie (303) pourvue des deuxièmes moyens d'engagement (308).

12. Dispositif pour allonger et relâcher un goujon (1) ayant un axe et disposé dans un objet (2), comprenant une première partie (4) pouvant être connectée au goujon (1) et qui peut seulement se déplacer axialement de manière à tirer le goujon (1) dans une direction axiale pour allonger le goujon et donc le tendre dans l'objet ou à relâcher le goujon; une deuxième partie pouvant être tournée (3) prévue pour déplacer axialement ladite première partie (4) et, dans ce but, connectée à ladite première partie (4), la deuxième partie ayant des premiers moyens d'engagement (8) pour permettre de lui appliquer une force de rotation; et un élément de frottement (5) connecté à ladite première partie (4) de sorte que ladite première partie (4) ait plus de surfaces coopérant avec d'autres éléments et pouvant être soumises à un frottement au cours du déplacement que ladite deuxième partie (3) et de sorte que ladite deuxième partie (3) ne soit pas connectée audit élément de frottement (5) mais puisse au contraire tourner librement par rapport audit élément de frottement (5) tout en venant buter librement contre l'élément de frottement (5); caractérisé en ce que ledit élément de frottement (5) et en option, ladite première partie (4), a des deuxièmes moyens d'engagement (21) formés de telle sorte qu'au moins une force de retenue puisse être appliquée directement par l'intermédiaire desdits deuxièmes moyens d'engagement (21), et en option, indirectement par l'intermédiaire de ladite première partie (4), audit élément de frottement (5), tandis que ladite force de rotation est appliquée aux premiers moyens d'engagement simultanément et dans une direction opposée, de sorte que lorsque ladite deuxième partie (3) est tournée et que ledit élément de frottement (5) est maintenu de manière fixe, ladite première partie (4) soit déplacée axialement pour déplacer le goujon (1) axialement sans le faire tourner de manière à allonger ou relâcher le goujon.

13. Dispositif selon la revendication 12, caractérisé en ce qu'il comprend en outre un premier moyen de filetage (17) connectant ladite première partie (4) au goujon (1), et un deuxième moyen de filetage (12, 14) connectant ladite première partie (4) à ladite deuxième partie (3).

14. Dispositif selon la revendication 12 ou 13, caractérisé en ce que ledit élément de frottement (5) est disposé entre l'objet (2) et une portion d'extrémité (9) de ladite deuxième partie (3) qui fait face à l'objet de sorte que ledit élément de frottement (5) entoure une portion d'extrémité (15) de ladite première partie (4) qui fait face à l'objet (2).

15. Dispositif selon l'une quelconque des revendications 12 à 14, caractérisé en ce que ledit premier moyen d'engagement (8) de ladite deuxième partie (3) est formé de telle sorte que ladite force active opposée puisse être appliquée à ladite deuxième partie (3) par l'engagement desdits premiers moyens d'engagement de ladite deuxième partie par un outil (T) de manière à faire tourner ladite deuxième partie (3) par l'outil.

16. Dispositif selon la revendication 12, caractérisé en ce que ledit deuxième moyen d'engagement (21) est formé de telle sorte que ladite première force de retenue puisse être appliquée audit élément de frottement (5) par l'engagement dudit deuxième moyen d'engagement (21) avec un outil de manière à maintenir ledit élément de frottement (5) au cours de la rotation de ladite deuxième partie (3).

17. Dispositif selon la revendication 12, caractérisé en ce qu'il comprend en outre une prise interne (120) pourvue de formations d'engagement supplémentaires (122) pouvant s'engager avec lesdits premiers moyens d'engagement (108), et une prise externe (123) pouvant tourner par rapport à ladite première prise (120) et pourvue de formations d'engagement supplémentaires (124) pouvant s'engager avec lesdits deuxièmes moyens d'engagement (125) dudit élément de frottement (105).

18. Dispositif selon la revendication 17, caractérisé en ce que lesdits premiers moyens d'engagement (122) de ladite deuxième partie (103) sont prévus sur une portion d'extrémité (108) de ladite deuxième partie (103), en ce que lesdites formations d'engagement supplémentaires (122) de ladite première prise (120) sont prévues sur une portion d'extrémité opposée (121) de ladite première prise (120), en ce que lesdits deuxièmes moyens d'engagement (125) dudit élément de frottement (105) sont prévus sur une surface périphérique externe dudit élément de frottement et en ce que lesdites formations d'engagement supplémentaires (124) de ladite deuxième prise (123) sont prévues sur une surface périphérique interne de ladite deuxième prise.

19. Dispositif selon la revendication 12, caractérisé en ce que ledit élément de frottement (205) est connecté à ladite première partie (204) radialement à l'intérieur de ladite première partie.

20. Dispositif selon la revendication 12, caractérisé en ce que ladite deuxième partie (303) a une surface périphérique externe (307) pourvue de premiers moyens d'engagement (308) auxquels la force active opposée est appliquée.

21. Dispositif selon la revendication 12, caractérisé en ce que ledit premier moyen d'engagement (21, 13) est formé sur ledit élément de frottement (5) et sur ladite première partie (4), de sorte que la force de retenue soit appliquée à ladite première partie (4) par l'intermédiaire dudit premier moyen d'engagement (13) et donc indirectement à l'élément de frottement (5) et aussi la force de retenue est appliquée directement à l'élément de frottement (5) par l'intermédiaire dudit premier moyen d'engagement (21).
